# EUROPEAN PATENT APPLICATION

(11) **EP 2 575 094 A1**
(43) Date of publication of application: **03.04.2013**
(21) Application number: 12185832.8
(22) Date of filing: 25.09.2012
(51) Int. Cl.: G06Q 10/10

(54) **System and method for identifying a qualified candidate**

(30) Priority: 29.09.2011 US 201113248806
(71) Applicant: The Boeing Company, Chicago, IL 60606-2016 (US)
(72) Inventor: Hanneman, Jeffrey Evan, Kirkland, WA Washington 98033 (US); Arnold, William G, Jacksonville, FL Florida 32217 (US); Warn, Brian, Seattle, WA Washington 98115 (US); Flores, Jaime A., Bellevue, WA 98005 (US)
(74) Representative: Howson, Richard G.B.

(57) **Abstract**

A system, method and computer program product are provided for identifying a qualified candidate from among a plurality of initial candidates in an efficient and reliable manner. In the context of a system, an associative memory is provided that is configured to store information regarding a plurality of candidate entities and at least one requisition entity. The associative memory is also configured to store information regarding attributes associated with candidate and requisition entities. Further, the associative memory is configured to store information regarding associations between the entities. The system also includes a receiver module configured to receive one or more query terms. The system may also include an identification module configured to identify the qualified candidate based upon the query terms and the associations between the candidate entities and the at least one requisition entity that are provided by the associative memory.

## Description

### TECHNOLOGICAL FIELD

Embodiments of the present disclosure relate generally to systems and methods for identifying a qualified candidate from among a plurality of initial candidates and, more particularly, to systems and methods for identifying a qualified candidate utilizing an associative memory.

### BACKGROUND

A plurality of initial candidates must oftentimes be screened in order to identify a smaller subset of qualified candidates that will, in turn, be evaluated in more detail. For example, a job requisition, such as a job posting, may be published in order to solicit candidates for a particular job. In response to the job requisition, a plurality of candidates may submit their resumes or other responses to a human resources staffing manager or another person responsible for filling the job position or otherwise identifying the most qualified candidates who are to be interviewed for the job. In order to identify the most qualified candidates, each of the resumes or other responses provided by the candidates must generally be reviewed.

In some instances, a large number of candidates may respond to a job posting such that there are a large number of resumes or other responses to be reviewed relative to the qualifications that were identified by the job requisition as being essential or preferable. This review of the multitude of resumes or other responses may be quite time-consuming and tedious. These issues may be exacerbated in a situation that would otherwise seem advantageous for the prospective employer in which a large number of candidates respond to the job posting by submitting their resumes. In this situation, the increase in the number of candidates may create a larger pool of potentially more qualified candidates. However, the increased number of candidates may also increase the time and effort required by a staffing manager or other person responsible for filling the position in order to select the most qualified candidates for further consideration.

In addition to the time and effort required to review the resumes submitted by a plurality of candidates, the ability to select the most qualified candidates for further consideration from among the multitude of initial candidates based upon a review of their resumes or other responses may depend upon the experience of the human resources staffing manager or other person responsible for the review of the resumes. In this regard, a more experienced manager may be able to more quickly review the plurality of resumes and other responses and to identify the most qualified candidates in a more reliable manner than a less experienced manager. However, the human resources staffing manager or other person responsible for the review of the resumes and other responses from the initial candidates may not always have the depth of experience that may be required to identify the most qualified candidates in the most efficient and reliable manner.

In an effort to assist in the process of reviewing resumes, automated search tools have been developed that filter the plurality of resumes and other responses submitted by the initial candidate based upon the identification of key words within the resumes or other responses. Typically, the key words are extracted from the job requisition and may include, for example, those skills, experience or education that are indicated to be required or preferable. While such automated search tools may more efficiently review a plurality of resumes or other responses from a group of initial candidates, the automated search tools may select a plurality of qualified candidates for further consideration in a manner that overlooks one or more other qualified candidates that would have been potentially identified if a human resources staffing manager or other person responsible for filling the job would have personally reviewed the resumes. For example, a resume may have included information indicative of the candidate having met each of the requirements and preferences expressed by the job requisition, but the resume may have utilized different expressions, e.g., acronyms, synonyms, etc., than those that are utilized by the automated search tool such that the resume will be passed over during the automated selection process.

Additionally, the qualified candidates that are identified by an automated search tool are generally presented in a manner that does not distinguish between the qualified candidates. As such, it may be unclear as to which of the qualified candidates is considered to be a closer match to the job requisition than the other qualified candidates. Thus, each of the qualified candidates may have to be individually considered in the same level of detail in order to ensure that the most qualified candidate is eventually identified.

While the evaluation of the resumes or other responses that are submitted by a group of initial applicants in response to a job requisition, such as a job posting, has been described above, the qualifications of a plurality of initial candidates may also be considered for other purposes including, for example, candidates for recognition or awards, candidates to assume various leadership roles, candidates for scholarships and candidates for advancement, promotion or the like. In each of these and other scenarios, the individual responsible for reviewing the resumes or other responses of the initial candidates in order to identify the most qualified candidates for further consideration may similarly struggle to comprehensively review the qualifications of the initial candidates in an efficient and reliable manner.

### BRIEF SUMMARY

A system, method and computer program product are therefore provided according to embodiments of the present disclosure for identifying a qualified candidate from among a plurality of initial candidates in an efficient and reliable manner. In this regard, the system, method and computer program product of the example embodiments may utilize an associative memory in order to establish associations between the candidates and a requisition, such as a job requisition. Based upon these associations, the qualified candidates may be identified in a manner that requires less time and is therefore more efficient than that provided by a manual review of the qualifications of the initial candidates. Additionally, the method, apparatus and computer program product of an embodiment of the present disclosure may identify the qualified candidates in a manner that is less dependent upon the experience level of a staffing manager or other person who would otherwise be responsible for the screening of the initial applicants, while generally producing more reliable results than prior automated search tools. Thus, a staffing manager or other person responsible for identifying the most qualified candidate may concentrate upon the review of the qualified candidates identified by the system, method and computer program product of an example embodiment of the present disclosure with confidence that the system, method and compute r program product have identified the most qualified candidates from among the plurality of initial candidates.

In one embodiment, a system is provided for identifying a qualified candidate from among a plurality of initial candidates. The system of this embodiment includes an associative memory configured to store information regarding a plurality of candidate entities and at least one requisition entity. For example, the candidate entities may include job candidate entities and a requisition entity may include a job requisition entity. The associative memory is also configured to store information regarding attributes associated with candidate and requisition entities. Further, the associative memory is configured to store information regarding associations between the entities. The system of this embodiment also includes a receiver module configured to receive one or more query terms. The system may also include an identification module configured to identify the qualified candidate based upon the query terms and the associations between the candidate entities and the at least one requisition entity that are provided by the associative memory. In one embodiment, the identification module may be configured to identify the qualified candidate by identifying the one or more candidate entities that are associated with the respective requisition entity and that include at least one query term.

The identification module of one embodiment may be further configured to identify a plurality of qualified candidates. In this embodiment, the system may also include a ranking module configured to rank the plurality of qualified candidates. The ranking module may be configured to rank the plurality of qualified candidates based upon the number of query terms that are included in the attributes of the candidate entities. Additionally or alternatively, the ranking module may be configured to rank the plurality of qualified candidates based upon the relative priority of the query terms that are included in the attributes of the candidate entities. In this regard, a respective requisition entity may define the relative priority of the query terms.

In another embodiment, a method is provided for identifying a qualified candidate from among a plurality of initial candidates. The method of this embodiment provides an associative memory that stores information regarding a plurality of candidate entities and at least one requisition entity. For example, the candidate entities may include job candidate entities and a requisition entity may include a job requisition entity. The associative memory also stores information regarding attributes associated with candidate and requisition entities. Further, the associative memory stores information regarding associations between the entities. The method of this embodiment also receives one or more query terms and then identifies the qualified candidate based upon the query terms and the associations between the candidate entities and the at least one requisition entity that are provided by the associative memory. For example, the identification of the qualified candidate may include the identification of one or more candidate entities that are associated with the respective requisition entity and that include at least one query term

The method of one embodiment may identify a plurality of qualified candidates and may rank the plurality of qualified candidates. In this embodiment, the plurality of qualified candidates may be ranked based upon a number of query terms that are included in the attributes of the candidate entities. Additionally or alternatively, the plurality of qualified candidates may be ranked based upon a relative priority of the query terms that are included in the attributes of the candidate instance. In this regard, a respective requisition entity may define the relative priority of the query terms.

In a further embodiment, a computer-readable storage medium is provided for identifying a qualified candidate from among a plurality of initial candidates. The computer-readable storage medium includes computer-readable program code portions stored therein that in response to execution by a processor cause an apparatus to provide an associative memory that stores information regarding a plurality of candidate entities and at least one requisition entity. The associative memory also stores information regarding attributes associated with candidate and requisition entities and information regarding associations between the entities. The computer-readable program code portions, upon execution by a processor, also cause the apparatus to receive one or more query terms and to identify the qualified candidate based upon the query terms and the associations between the candidate entities and the at least one requisition entity that are provided by the associative memory. For example, the computer-readable program code portions for identifying the qualified candidate may include program code potions for identifying the one or more candidate entities that are associated with the respective requisition entity and that include at least one query term.

The computer-readable program code portions of one embodiment may also include program code portions for identifying a plurality of qualified candidates and program code portions for ranking the plurality of qualified candidates. In this regard, the computer-readable program code portions for ranking the plurality of qualified candidates may include program code portions for ranking the plurality of qualified candidates based upon a number of query terms that are included in the attributes of the candidate entities. Additionally or alternatively, the computer-readable program code portions for ranking the plurality of qualified candidates may include program code portions for ranking the plurality of qualified candidates based upon the relative priority of the query terms that are included in the attributes of the candidate entities.

In accordance with embodiments of the present disclosure, a system, method and computer-readable storage media are therefore provided in order to identify a qualified candidate from among the plurality of initial candidates in an efficient and reliable manner by use of an associative memory. However, the features, functions and advantages that have been discussed may be achieved independently in the various embodiments of the present disclosure and may be combined in other embodiments, further details of which may be seen with reference to the detailed description and the drawings.

### BRIEF DESCRIPTION OF THE DRAWINGS

Having thus described embodiments of the present disclosure in general terms, reference will now be made to the accompanying drawings, which are not necessarily drawn to scale, and wherein:
Figure 1 is a block diagram of a system for identifying a qualified candidate from among a plurality of initial candidates in accordance with one embodiment of the present disclosure;
Figure 2 is a flow chart illustrating the operations performed in order to identify a qualified candidate from among a plurality of initial candidates in accordance with one embodiment of the present disclosure; and
Figure 3 is another block diagram of a system for identifying a qualified candidate for a job requisition from among four job candidates using an associative memory in accordance with one embodiment to the present disclosure.

### DETAILED DESCRIPTION

Embodiments of the present disclosure now will be described more fully hereinafter with reference to the accompanying drawings, in which some, but not all embodiments are shown. Indeed, these embodiments may be embodied in many different forms and should not be construed as limited to the embodiments set forth herein; rather, these embodiments are provided so that this disclosure will satisfy applicable legal requirements. Like numbers refer to like elements throughout.

Example embodiments in the present disclosure provide a system, method and computer readable storage medium for identifying a qualified candidate from among a plurality of initial candidates. As described below, the initial candidates may be responding to a job requisition, such as a job posting, or may be applying for any of a number of other positions, such as recognitions, awards, leadership roles, scholarships, advancement, promotion or the like. By identifying a qualified candidate in an efficient and reliable manner as described herein, a person who would otherwise be tasked with reviewing the resumes or other responses from the initial applicants may, instead, concentrate their efforts upon the consideration of the qualified candidate(s) to insure that the best candidate is eventually selected for the position. As explained below, the system of example embodiments of the present disclosure may include or otherwise be in communication with a number of modules configured to perform respective operations described herein. Although shown as separate modules, it should be understood that the operations performed by more than one module may be integrated within and instead performed by a single module. It should also be understood that operations performed by one module may be separated and, instead, performed by more than one module.

A module may be embodied as various means for implementing the various functionalities of example embodiments of the present disclosure. A module may optionally include, for example, one or more processors, memory devices, Input/Output (I/O) interfaces, communications interfaces and/or user interfaces. The processor may include, for example, one or more of a microprocessor, a coprocessor, a controller, a special-purpose integrated circuit such as, for example, an ASIC (application specific integrated circuit), an FPGA (field programmable gate array), DSP (digital signal processor), or a hardware accelerator, processing circuitry or other similar hardware. According to one example embodiment, the processor may be representative of a plurality of processors, or one or more multi-core processors, operating individually or in concert. A multi-core processor enables multiprocessing within a single physical package. Further, the processor may be comprised of a plurality of transistors, logic gates, a clock (e.g., oscillator), other circuitry, and the like to facilitate performance of the functionality described herein. The processor may, but need not, include one or more accompanying digital signal processors (DSPs). A DSP may, for example, be configured to process real-world signals in real time independent of the processor. Similarly, an accompanying ASIC may, for example, be configured to perform specialized functions not easily performed by a more general purpose processor. In some example embodiments, the processor is configured to execute instructions stored in the memory device or instructions otherwise accessible to the processor. The processor may be specifically configured to operate such that the processor causes the module to perform various functionalities described herein.

Whether configured as hardware alone or via instructions stored on a computer-readable storage medium, or by a combination thereof, the processor may be an apparatus embodying or otherwise configured to perform operations of a module according to embodiments of the present disclosure while accordingly configured. Thus, in example embodiments where the processor is embodied as, or is part of, an ASIC, FPGA, or the like, the module is specifically configured hardware for conducting the operations described herein. Alternatively, in example embodiments where the processor is embodied as an executor of instructions stored on a computer-readable storage medium, the instructions specifically configure the module to perform the algorithms and operations described herein.

The memory device of a module may be one or more non-transitory computer-readable storage media that may include volatile and/or non-volatile memory. In some example embodiments, the memory device includes Random Access Memory (RAM) including dynamic and/or static RAM, on-chip or off-chip cache memory, and/or the like. Further, the memory device may include non-volatile memory, which may be embedded and/or removable, and may include, for example, Read-Only Memory (ROM), flash memory, magnetic storage devices (e.g., hard disks, floppy disk drives, magnetic tape, etc.), optical disc drives and/or media, non-volatile random access memory (NVRAM), and/or the like. The memory device may include a cache area for temporary storage of data. In this regard, at least a portion or the entire memory device may be included within the processor of the module.

Further, the memory device of a module may be configured to store information, data, applications, computer-readable program code instructions, and/or the like for enabling the module to carry out various functions in accordance with example embodiments of the present disclosure described herein. For example, the memory device may be configured to buffer input data for processing by the processor of the module. Additionally, or alternatively, the memory device may be configured to store instructions for execution by the processor.

The I/O interface of a module may be any device, circuitry, or means embodied in hardware, software or a combination of hardware and software that is configured to interface the processor of the module with other circuitry or devices, such as the communications interface and/or the user interface of the module. In some example embodiments, the processor may interface with the memory device via the I/O interface. The I/O interface may be configured to convert signals and data into a form that may be interpreted by the processor. The I/O interface may also perform buffering of inputs and outputs to support the operation of the processor. According to some example embodiments, the processor and the I/O interface may be combined onto a single chip or integrated circuit configured to perform, or cause the module to perform, various functionalities of an example embodiment of the present disclosure.

The communication interface of a module may be any device or means embodied in hardware, software or a combination of hardware and software that is configured to receive and/or transmit data from/to one or more networks and/or any other device or module in communication with the respective module. The communications interface may be configured to provide for communications in accordance with any of a number of wired or wireless communication standards. The processor of the module may also be configured to facilitate communications via the communications interface by, for example, controlling hardware included within the communications interface. In this regard, the communication interface may include, for example, one or more antennas, a transmitter, a receiver, a transceiver and/or supporting hardware, including, for example, a processor for enabling communications. The module of one example may communicate via the communication interface with various other network elements in a device-to-device fashion and/or via indirect communications.

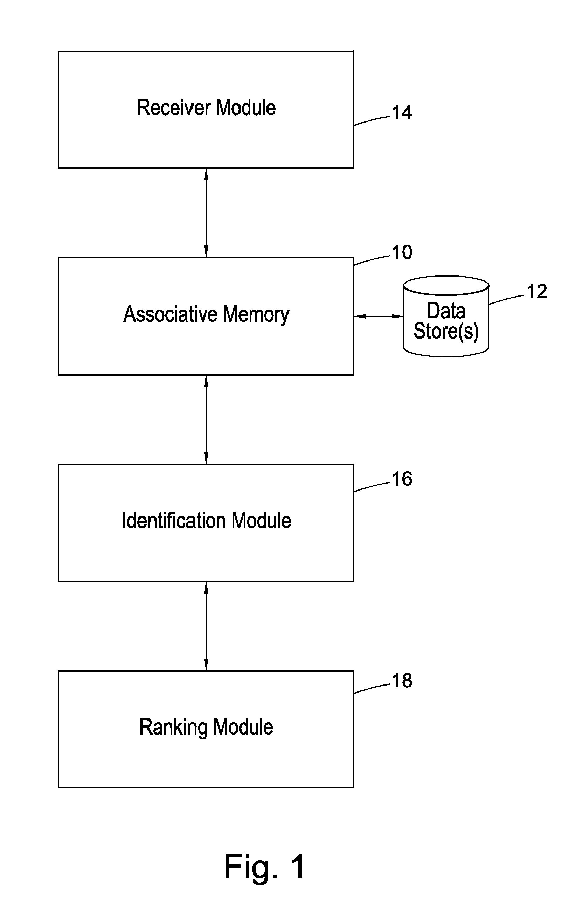

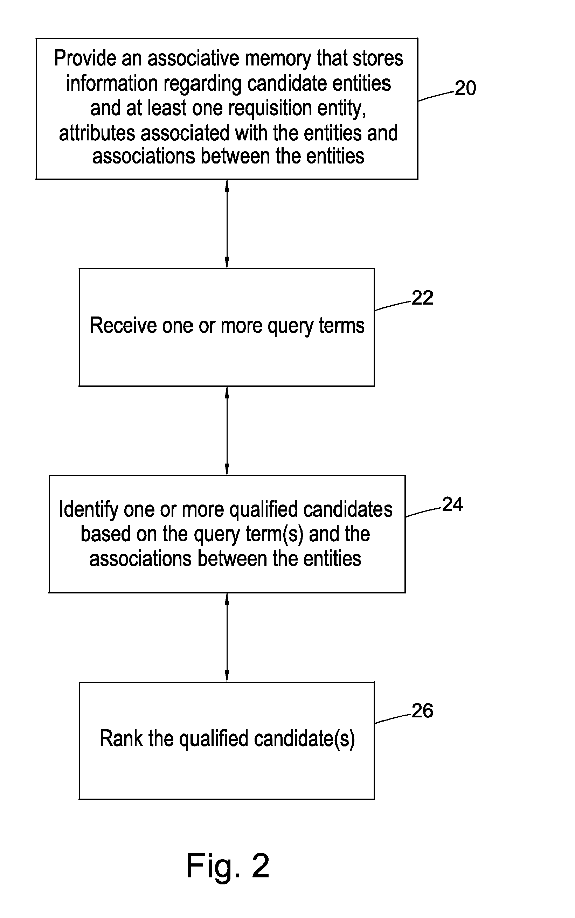

The user interface of a module may be in communication with the processor of the module to receive user input via the user interface and/or to present output to a user as, for example, audible, visual, mechanical or other output indications. The user interface may include, for example, a keyboard, a mouse, a joystick, a display (e.g., a touch screen display), a microphone, a speaker, or other input/output mechanisms. Further, the processor may comprise, or be in communication with, user interface circuitry configured to control at least some functions of one or more elements of the user interface. The processor and/or user interface circuitry may be configured to control one or more functions of one or more elements of the user interface through computer program instructions (e.g., software and/or firmware) stored on a memory accessible to the processor (e.g., the memory device of the module). In some example embodiments, the user interface circuitry is configured to facilitate user control of at least some functions of the module through the use of a display and configured to respond to user inputs. The processor may also comprise, or be in communication with, display circuitry configured to display at least a portion of a user interface, the display and the display circuitry configured to facilitate user control of at least some functions of the module.
As shown in Figure 1 and in operation 20 of Figure 2, the system includes an associative memory 10 that is configured to store information regarding a plurality of entities, a plurality of attributes associated with respective entities and associations between the entities. Associative memory 10 is a data storage device in which a location is identified by its informational content rather than by names, addresses or relative positions and from which data, such as data regarding associations between entities, may be retrieved. In one embodiment, the associative memory 10 is a multi-tier associative memory.

An associative memory 10, such as the associative memories offered by Saffron Technology, Inc., may receive various types of data, at least some of which may be unstructured. The data may be provided by any of a number of sources. The associative memory 10 may identify a plurality of entities and attributes from the data. The associative memory 10 may utilize various techniques to identify the entities and attributes including, for example, regular expressions, name lists, semantic general parsing and the like. The associative memory 10 may construct a matrix for each entity that describes the entity in terms of its attributes. For each attribute associated with a respective entity, the frequency count, that is, the number of times that the attribute was associated with the respective entity, may be determined. Each entity is also assigned an entity class or entity type with the various classes or types of entities being defined in various manners including, for example, by a name list.

An associative memory 10 aggregates all of the matrices that describe the entities in terms of their attributes. The associative memory 10 may also determine relationships or associations between matrices based upon attributes that are in common between the matrices. In this regard, the associative memory 10 may determine a correlation between matrices that are related or associated based upon the number of shared attributes and the uniqueness of the shared attributes. In this regard, the correlation generally increases as the number of shared attributes increases and/or as the uniqueness of the shared attributes increases. Conversely, the correlation generally decreases as the number of shared attributes decreases and/or as the uniqueness of the shared attributes decreases. In order to identify a qualified candidate from among a plurality of initial candidates, the associative memory 10 of one embodiment is configured to store information regarding a plurality of candidate entities and at least one requisition entity. The type of candidate entity and the type of requisition entity may vary dependent upon the type of position that is to be filled. As described below by way of example, but not of limitation, a position may be a job such that the candidate entities are job candidate entities, and the requisition entity is a job requisition entity. However, the position that is described by the requisition entity and for which the candidate entities apply or are being considered may be any one of a number of other positions including, for example, recognition or an award, a leadership role, a scholarship, advancement, a promotion or the like. Thus, the system, method and computer program product of the various embodiments of the present disclosure are not to be limited to the consideration of job candidates that are responding to a job posting, even though the system, method and computer program product will be hereinafter described primarily in conjunction with such an example embodiment.

Regardless of the particular type of position under consideration, the requisition entity generally defines a position that is to be filled including, for example, the requirements of the position and the preferences for the position. In one example, a requisition, such as a job posting or job listing, may be developed that defines the qualifications, such as experience, education, skills, etc., that are required and the qualifications that are preferred. The requisition, such as the job posting or job listing, may be stored in a data store 12. The associative memory 10 may, in turn, access the data store 12 and the information regarding the requisition entity that is stored by the associative memory may be extracted from or otherwise provided by the requisition, such as the job posting or job listing, that has been stored within the data store. The requisition stored by the data store 12 and, in turn, the requisition entity stored by the associative memory 10 may be referenced in various manners including, for example, by a requisition number, a requisition title or the like.

A plurality of resumes from or other information, such as an application form, a list of qualifications or the like, regarding a plurality of initial candidates may have been submitted in response to the requisition, such as a job posting or job listing. In this regard, the resumes or other information may have been submitted by the candidate or by another person, such as a manager in an instance in which a candidate is to be considered for a promotion or an award, a sponsor in an instance in which a candidate is to be considered for a scholarship or the like. Additionally or alternatively, a plurality of resumes or other information regarding a plurality of candidates may have been previously collected and maintained on file, such as by a prospective employer in regards to a prior job search. Regardless of the origin of the resumes or other information, the resumes from or the other information regarding the plurality of initial candidates may also be stored in a data store 12, either the same data store as that which stores the requisitions or another data store. The associative memory 10 is also configured to access the resumes or other information regarding the initial candidates that are stored by the data store 12 and to store information regarding the candidate entities that is extracted from or otherwise provided by the resumes or other information regarding the initial candidates.

The associative memory 10 is also configured to store information regarding attributes associated with the candidate and requisition entities. The associative memory 10 may be configured to store information regarding a variety of different types of attributes. With respect to a job requisition entity, for example, the attributes may include those qualifications that are defined by the requisition, such as a job posting or job listing, as being either required or preferred, such as the level of experience in terms of years and in terms of prior positions, skills, educational degree(s) or the like. Similarly, with respect to a job candidate entity, the attributes may include various facts extracted from the candidate's resume such as the years of experience, the prior positions held by the candidate, the educational degree(s) conferred upon the candidate, the skills possessed by the candidate and the like.

The associative memory 10 is also configured to store information regarding the associations between the entities, such as between the candidate entities and the at least one requisition entity. These associations may be established by the associative memory 10 based upon the matching of attributes associated with the candidate entities with attributes of a requisition entity. By way of example, the job requirements and preferences that are reflected by the attributes of a job requisition entity may be matched with the qualifications of a candidate entity in an instance in which the candidate entity and the respective requisition entity are associated. However, the associative memory may be configured to identify the associations between the entities without the use of reductive algorithms or rules.

The system also includes a receiver module 14 that may be embodied by one or more processors, one or more I/O interfaces, one or more communication interfaces, one or more user interfaces or the like and is configured to receive one or more query terms. See operation 22 of Figure 2. In this regard, the query terms may be provided by a user and may signify the particular terms that are of most import or significance to the user in regard to a respective requisition, such as a job posting. In this regard, a receiver module 14 may be configured to not only receive the query terms, but also to receive an indication of the requisition, such as the requisition number, the requisition title or the like, to which the query terms relate.

The system may also include an identification module 16 that may be embodied by one or more processors or the like and is configured to identify the qualified candidate based upon the query terms and the associations between the candidate entities and the at least one requisition entity that are provided by the associative memory 10. See operation 24 of Figure 2. The identification module 16 may be configured to identify the qualified candidate in various manners. In one embodiment, however, the identification module 16 initially identifies the candidate entities that are associated with the respective requisition entity, as previously defined by the associative memory 10. Of the candidate entities that are associated with the respective requisition entity, the identification module 16 may be configured to determine which of these candidate entities also include one or more of the query terms. The identification module 16 of this example embodiment may be configured to then identify each of the candidate entities that are associated with the respective requisition entity and that also include at least one of the query terms as being a qualified candidate.

While the identification module 16 may identify a single qualified candidate in some instances, the identification module of other embodiments may be configured to identify a plurality of qualified candidates, such as in instances in which a plurality of the candidate entities that are associated with a respective requisition entity also include at least one of the query terms. In the embodiment in which the identification module 16 is configured to identify a plurality of qualified candidates, the system may also include a ranking module 18 that is configured to rank the plurality of qualified candidates, as shown in operation 26 of Figure 2. The ranking module 18 may be embodied by one or more processors or the like and may be configured to rank the qualified candidates in various manners. In one embodiment, however, the ranking module 18 may be configured to determine the number of query terms that are included in the attributes of the candidate entity associated with the qualified candidate and may then rank the plurality of qualified candidates based upon the number of query terms. In this embodiment, a qualified candidate that includes the greatest number of query terms may be ranked first or highest with the other qualified candidates being ranked thereafter in order of the number of query terms that are included in the attributes of the associated candidate entities.

In addition to considering the number of query terms included in the attributes of the candidate entities associated with the qualified candidates or instead of considering the number of query terms that are included in the attributes of the candidate entities associated with the qualified candidates, the ranking module 18 may be configured to rank the plurality of qualified candidates based upon the relative priority of the query terms that are included in the attributes of the candidate entities associated with the qualified candidates. For example, the various query terms may be weighted such that some query terms are of a higher priority and are therefore of more importance or significance than other query terms. By way of example in which the query terms represent the requirements and preferences of a job requisition, the query terms that are based upon the requirements of the job requisition may be more greatly weighted and may therefore have a higher priority than the query terms that are based upon the preferences of the job requisition. Thus, the ranking module 18 may be configured to rank the plurality of qualified candidates such that the qualified candidates that are associated with candidate entities that include more query terms of higher priority are more highly ranked than other qualified candidates that are associated with candidate entities that include fewer query terms of lower priority.

By way of example, a ranking module 18 may be configured to determine a score for each of the qualified candidates that is based upon some of the weights or priorities associated with each of the query terms that are included in the attributes of the candidate entities associated with the qualified candidates. In this regard, the qualified candidate that has the greatest score may be the most highly ranked with the other qualified candidate having lower scores being ranked thereafter in the order of their scores. The relative priority of the query terms may be defined in various manners including by the respective requisition entity which may define some attributes as being requirements so as to be more highly weighted and other attributes as being preferences so as to be more lightly weighted. Alternatively, the user that provides the query terms may also provide a weight associated with each query term so as to explicitly define the relative priority therebetween.

The system, such as the identification module 16, may be configured to cause the qualified candidates to be displayed. In embodiments that include a ranking module 18, the qualified candidates may be caused to be displayed in order of the respective rankings. In this regard, the qualified candidates may be identified in a manner that is dependent upon their relative rankings such that a user may quickly determine the qualified candidate that is the most highly ranked relative to the other qualified candidates that are of a lesser rank. While the relative rank between the qualified candidates may be represented in various manners, the identification module 16 and/or the ranking module 18 may cause an ordered list of the qualified candidates to be presented. Additionally or alternatively, the ranking module 18 of one embodiment may assign as predefined priority to the highest ranking qualified candidate, such as a predefined priority of 1.0. The ranking module 18 of this embodiment may then determine the priority of the other qualified candidates relative to the predefined priority of the most highly ranked qualified candidate. For example, in an instance in which the ranking module 18 assigns a score to each qualified candidate based upon the relative priority of the query terms that are included in the attributes of the candidate entities associated with the qualified candidates, the priorities associated with the qualified candidates may represent the scores of the qualified candidates once the scores have been scaled from 0 to the predefined priority value, such as 1.0, of the most highly ranked qualified candidate.

Based upon the identification and, in some embodiments, the ranking of the qualified candidates, a user, such as a human resources staffing manager or the like, may efficiently determine the candidates, that is, the qualified candidates, that merit further consideration in an efficient and reliable manner. Additionally, the relative priorities assigned by the ranking module 18 to the qualified candidates in one embodiment may enable a user to at least initially invest their time in the further review of the most highly ranked qualified candidates as opposed to initially considering all of the qualified candidates in the same level of detail, thereby further increasing the efficiency of the overall process.

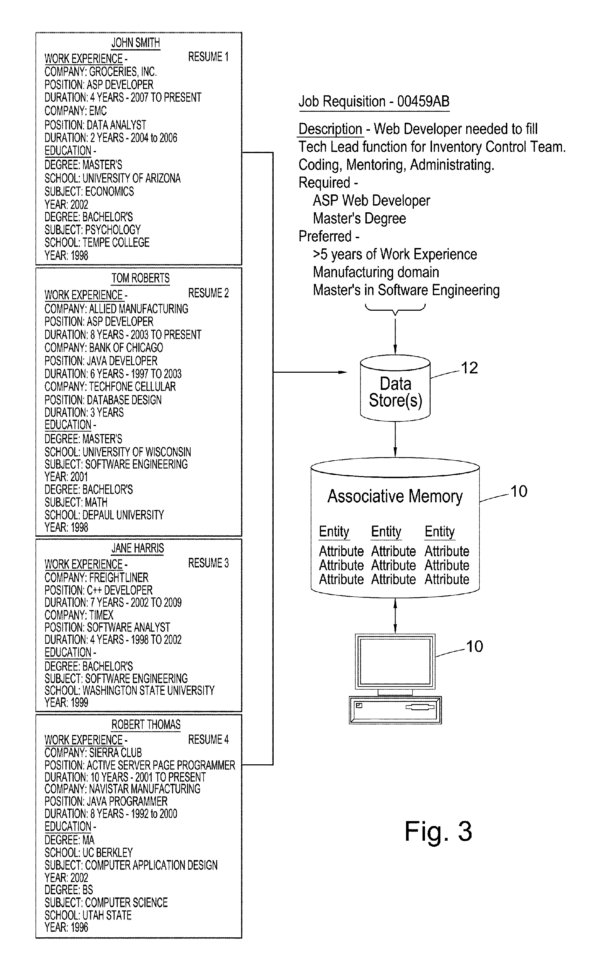

By way of another example, reference is made to the embodiment of Figure 3. In this example embodiment, a job requisition, that is, Requisition No. 00459AB, has been issued for a web developer to fill a tech lead function for the inventory control team including coding, mentoring and administrating. The job requisition may be stored in the data store 12. Additionally, resumes from four initial candidates, that is, Resume 1 from John Smith, Resume 2 from Tom Roberts, Resume 3 from Jane Harris and Resume 4 from Robert Thomas, have been received and are also stored in the data store 12. The associative memory 10 may access the data store 12 and may create candidate entities for each of the four initial candidates and a requisition entity for the job requisition. The associative memory 10 may also store attributes associated with the candidate and requisition entities. In regard to the job requisition of this example, the attributes associated therewith may include the requirements and preferences of the job including, for example, software engineering, manufacturing, experience, ASP, software, developer, > 5 years, degree, Master's, Engineering and ASP developer. With respect to the candidate entities, the attributes may include at least those qualifications that correspond to the requirements and preferences of the job such as ASP Developer, 4 years, Bachelor's, ASP, University of Arizona, Analyst, Developer, Master's, Experience and University in regards to Resume 1 from John Smith, ASP Developer, Bachelor's, Manufacturing, Java, ASP, 6 years, Developer, Software Engineering, Master's, Experience, Software, Design and 8 years in regards to Resume 2 from Tom Roberts, 4 years, Bachelor's, Analyst, C++, Software Engineering, Developer, Software, Experience, University and Engineering in regards to Resume 3 from Jane Harris and BS, Manufacturing, Java, Active Server Page Programmer, 8 years and Programmer in regards to Resume 4 from Robert Thomas.

Additionally, the associative memory 10 may determine and store information regarding associations between the entities, such as associations based upon matching attributes between one or more of the candidate entities and the job requisition entity. In this regard, the associative memory 10 may be configured to recognize acronyms and synonyms as well as other alternative phraseology for expressing the same concept so as to permit associations to be established based upon the matching of attributes that may not be identical, but may be corresponding expressions, such as acronyms, synonyms, etc.

In this embodiment, a receiver module 14, such as a computer 30 in Figure 3, may receive one or more query terms from a user. For example, the query terms may be ASP developer, Master's Degree and software engineering. The identification module 16 of this embodiment may then identify a qualified candidate based upon the query terms and the associations between the candidate entities and the at least one requisition entity that are provided by the associative memory 10. In this regard, the identification module 16 may consider the candidate entities that have been associated with the job requisition entity by the associative memory 10 and may then determine which ones of those candidate entities include one or more of the query terms. In making this determination, the identification module 16 may also be configured to recognize acronyms, such as ASP for Active Server Page, MS for Master's, BS for Bachelor's, etc., and synonyms, such as Developer and Programmer, as well as other alternative phraseology for expressing the same concept so as to permit the query terms to be matched with the attributes of the candidate entities in instances in which the query terms and the attributes are not identical, but are corresponding expressions, such as acronyms, synonyms, etc.

In the foregoing example, each of the candidate entities have a common attribute with the job requisition entity such that the associative memory 10 determines that each of the four candidate entities are associated with the requisition entity. Additionally, each of the candidate entities have attributes that match one or more of the query terms. As such, the identification module 16 will consider each of the four candidate entities to be a qualified entity.

In this example embodiment, however, a ranking module 18 may determine a relative ranking between the qualified candidates based upon, for example, the number of query terms that match with the attributes of the candidate entities and the relative priority of those matching query terms. In this regard, the job qualifications that are identified by the job requisition to be required have a higher priority than the job qualifications that are identified to be preferable. In the foregoing example, the query terms ASP developer and Master's Degree are more highly weighted than the software engineering query term because the job requisition requires a candidate to be an ASP web developer and to have a Master's Degree, but only expresses a preference that the Master's degree be in software engineering. Thus, Resume 2 for Tom Roberts is the most highly ranked resume because Resume 2 includes each of the query terms. Additionally, Resume 4 for Robert Thomas and Resume 1 for John Smith are the second and third most highly ranked resumes, respectively, as Resumes 4 and 1 include variations of the two most highly prioritized query terms (namely, ASP developer and Master's Degree), but lack the software engineering query term. Additionally, although they include the same query terms, Resume 4 may be ranked higher than Resume 1 since Resume 4 includes the other preferences expressed by the job requisition (namely, > 5 years of work experience and manufacturing domain), while Resume 1 did not. Finally, Resume 3 for Jane Harris may be ranked fourth, as Resume 3 does not include the two more highly prioritized query terms and, instead, includes only the least prioritized query term of software engineering.

Based upon the ranking of the qualified candidates, a human resources staffing manager or other person responsible for filling the job position may review the resumes of the qualified candidates, typically in the order in which the resumes are ranked, and may then select one or more of the qualified candidates for further review, such as an interview. While an individual, such as a human resources staffing manager, is generally still involved in the actual selection of the most qualified candidate following the identification of the qualified candidates, the system, method and computer program product of embodiments of the present disclosure may identify one or more qualified candidates from the pool of initial candidates in an efficient and reliable manner, thereby reducing the time required for review of the resumes of the initial candidates while producing reliable results based upon the associations defined by the associative memory 10.

Figures 1-3 illustrate block diagrams of example systems, methods and/or computer program products according to example embodiments. It will be understood that each module or block of the block diagrams, and/or combinations of modules or blocks in the block diagrams, can be implemented by various means. Means for implementing the modules or blocks of the block diagrams, combinations of the modules or blocks in the block diagrams, or other functionality of example embodiments described herein may include hardware, and/or a computer program product including a non-transitory computer-readable storage medium (as opposed to a computer-readable transmission medium which describes a propagating signal) having one or more computer program code instructions, program instructions or executable computer-readable program code instructions stored therein. In this regard, program code instructions for carrying out the operations and functions of the modules of Figures 1 and 3 and the blocks of Figure 2 and otherwise described herein may be stored in the memory device of an example apparatus, and executed by a processor. As will be appreciated, any such program code instructions may be loaded onto a computer or other programmable apparatus (e.g., processor, memory device or the like) from a computer-readable storage medium to produce a particular machine, such that the particular machine becomes a means for implementing the functions specified in the block diagrams' modules and blocks.

These program code instructions may also be stored in a computer-readable storage medium that can direct a computer, processor or other programmable apparatus to function in a particular manner to thereby generate a particular machine or particular article of manufacture. The instructions stored in the computer-readable storage medium may produce an article of manufacture, where the article of manufacture becomes a means for implementing the functions specified in the block diagrams' modules or blocks. The program code instructions may be retrieved from a computer-readable storage medium and loaded into a computer, processor or other programmable apparatus to configure the computer, processor or other programmable apparatus to execute operations to be performed on or by the computer, processor or other programmable apparatus. Retrieval, loading and execution of the program code instructions may be performed sequentially such that one instruction is retrieved, loaded and executed at a time. In some example embodiments, retrieval, loading and/or execution may be performed in parallel such that multiple instructions are retrieved, loaded and/or executed together. Execution of the program code instructions may produce a computer-implemented process such that the instructions executed by the computer, processor or other programmable apparatus provide operations for implementing the functions specified in the block diagrams' modules or blocks.

Accordingly, execution of instructions associated with the operations of the modules or blocks of the block diagrams by a processor, or storage of instructions associated with the modules or blocks of the block diagrams in a computer-readable storage medium, supports combinations of operations for performing the specified functions. It will also be understood that one or more modules or blocks of the block diagrams, and combinations of modules or blocks in the block diagrams, may be implemented by special purpose hardware-based computer systems and/or processors which perform the specified functions, or combinations of special purpose hardware and program code instructions.

Many modifications and other embodiments set forth herein will come to mind to one skilled in the art to which these embodiments pertain having the benefit of the teachings presented in the foregoing descriptions and the associated drawings. Therefore, it is to be understood that the embodiments are not to be limited to the specific ones disclosed and that modifications and other embodiments are intended to be included within the scope of the appended claims. For example, while the initial candidates may be responding to a job requisition, such as a job posting, as described above, the initial candidates may, instead, be applying for any of a number of other positions, such as recognitions, awards, leadership roles, scholarships, advancement, promotion or the like. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. A system for identifying a qualified candidate from among a plurality of initial candidates, the system comprising:
an associative memory configured to store information regarding a plurality of candidate entities and at least one requisition entity, attributes associated with candidate and requisition entities and associations between the entities;
a receiver module configured to receive one or more query terms; and
an identification module configured to identify the qualified candidate based upon the query terms and the associations between the candidate entities and the at least one requisition entity that are provided by the associative memory.

2. A system according to Claim 1 wherein the identification module is further configured to identify a plurality of qualified candidates, and wherein the system further comprises a ranking module configured to rank the plurality of qualified candidates.

3. A system according to Claim 2 wherein the ranking module is configured to rank the plurality of qualified candidates based upon a number of query terms that are included in the attributes of the candidate entities.

4. A system according to Claim 2 wherein the ranking module is configured to rank the plurality of qualified candidates based upon a relative priority of the query terms that are included in the attributes of the candidate entities.

5. A system according to Claim 4 wherein a respective requisition entity defines the relative priority of the query terms.

6. A system according to Claim 1 wherein the identification module is configured to identify the qualified candidate by identifying the one or more candidate entities that are associated with a respective requisition entity and that include at least one query term.

7. A system according to Claim 1 wherein the candidate entities comprise job candidate entities and the requisition entity comprises a job requisition entity.

8. A method for identifying a qualified candidate from among a plurality of initial candidates, the method comprising:
providing an associative memory that stores information regarding a plurality of candidate entities and at least one requisition entity, attributes associated with candidate and requisition entities and associations between the entities;
receiving one or more query terms; and
identifying the qualified candidate based upon the query terms and the associations between the candidate entities and the at least one requisition entity that are provided by the associative memory.

9. A method according to Claim 8 further comprising identifying a plurality of qualified candidates and ranking the plurality of qualified candidates.

10. A method according to Claim 9 wherein ranking the plurality of qualified candidates comprises ranking the plurality of qualified candidates based upon a number of query terms that are included in the attributes of the candidate entities.

11. A method according to Claim 9 wherein ranking the plurality of qualified candidates comprises ranking the plurality of qualified candidates based upon a relative priority of the query terms that are included in the attributes of the candidate entities.

12. A method according to Claim 11 wherein a respective requisition entity defines the relative priority of the query terms.

13. A method according to Claim 8 wherein identifying the qualified candidate comprises identifying the one or more candidate entities that are associated with a respective requisition entity and that include at least one query term.

14. A method according to Claim 8 wherein the candidate entities comprise job candidate entities and the requisition entity comprises a job requisition entity.
